# EUROPÄISCHE PATENTSCHRIFT

(11) **EP 3 826 804 B1**
(45) Veröffentlichungstag und Bekanntmachung des Hinweises auf die Patenterteilung: **01.10.2025**
(21) Anmeldenummer: 19805205.2
(22) Anmeldetag: 13.11.2019
(51) Int. Cl.: G01B 13/12

(54) **PRÜFEINRICHTUNG ZUR ANLAGEPRÜFUNG EINES OBJEKTS AN EINER SPANNVORRICHTUNG**
TEST EQUIPMENT FOR TESTING THE SEATING OF AN OBJECT ON A CLAMPING DEVICE
DISPOSITIF DE CONTRÔLE POUR LE CONTRÔLE D'INSTALLATION D'UN OBJET SUR UN DISPOSITIF DE SERRAGE

(30) Priorität: 14.11.2018 DE 102018219449
(43) Veröffentlichungstag der Anmeldung: 02.06.2021
(73) Patentinhaber: MAG IAS GmbH, 73054 Eislingen (DE)
(72) Erfinder: BIRKNER, Tobias, 73061 Ebersbach (DE); SORKALLA, Stephen, 73066 Uhingen (DE)
(74) Vertreter: Rau, Schneck & Hübner Patentanwälte Rechtsanwälte PartGmbB
(86) Internationale Anmeldenummer: PCT/EP2019/081097
(87) Internationale Veröffentlichungsnummer: WO 2020/099449

(56) Entgegenhaltungen:
- DE-A1- 102006 001 740
- DE-A1- 102008 006 776
- DE-A1- 4 232 630
- US-A1- 2016 243 662

## Beschreibung

Die Erfindung betrifft eine Prüfeinrichtung zur Anlageprüfung eines Objekts an einer Spannvorrichtung. Ferner betrifft die Erfindung eine Spannvorrichtung zum Positionieren und Aufspannen eines Objekts mit einer derartigen Prüfeinrichtung sowie eine Werkzeugmaschine mit einer derartigen Spannvorrichtung. Die Erfindung betrifft zudem ein Verfahren zur Anlageprüfung eines Objekts an einer Spannvorrichtung.

Aus der DE 10 2014 112 819 A1 ist eine Werkzeugmaschine bekannt, welche eine Arbeitsspindel mit einer druckluftgestützten Plananlageprüfung aufweist. Zum Bestimmen eines Spannzustands eines Werkzeugs an einer Spannvorrichtung wird gemäß einer Ausführungsalternative ein Druck an einer von Druckluftkanälen abzweigenden Düse detektiert. Eine derartige Plananlageprüfung ist im Aufbau komplex und weist einen hohen Druckluftverbrauch auf.

Aus der US 2016/0243662 A1 ist eine Werkzeugmaschine, aufweisend eine Spannvorrichtung mit einer Prüfeinrichtung zur Anlageprüfung eines Objekts an der Spannvorrichtung bekannt. Die Prüfeinrichtung umfasst eine Messkammer, einen Zuströmwiderstand, einen Abströmwiderstand und einen Drucksensor zum Erfassen eines Drucks in der Messkammer. Nachteilig ist, dass das Befüllen der Messkammer mit Prüffluid, insbesondere eine zur Anlageprüfung erforderliche Ausbildung eines stationären Strömungszustands, und damit auch die Anlageprüfung sehr zeitintensiv sind.

Derartige Prüfeinrichtungen sind ferner bekannt aus der JP 2017-007027 A und der JP 2006-055975 A. Eine Messvorrichtung zur pneumatischen Messung von Abständen ist bekannt aus der DE 42 32 630 A1. Eine Prüfeinrichtung zur Anlageprüfung eines Objektes an einer Spannvorrichtung ist bekannt aus der US 2016/0243662 A1. Eine Abstands-Messeinrichtung ist bekannt aus der DE 10 2006 001 740 A1. Eine pneumatische Auflagenkontrolleinrichtung ist bekannt aus der DE 10 2008 006 778 A1.

Der Erfindung liegt die Aufgabe zugrunde, eine einfache Prüfeinrichtung zur Anlageprüfung eines Objekts an einer Spannvorrichtung zu schaffen, welche effizient und zuverlässig betreibbar ist.

Diese Aufgabe wird durch eine Prüfeinrichtung mit den Merkmalen des Anspruchs 1 gelöst. Erfindungsgemäß wurde erkannt, dass die Prüfeinrichtung den mindestens einen Abströmwiderstand zum Begrenzen des Abstroms des Prüffluids aus der Messkammer und den Zuströmwiderstand zum Begrenzen des Zustroms des Prüffluids in die Messkammer aufweisen muss, um einen besonders niedrigen Druckluftverbrauch zu gewährleisten. Dadurch, dass der Drucksensor derart ausgebildet bzw. angeordnet ist,
dass dieser den Druck des Prüffluids in der Messkammer erfasst, ist die Prüfeinrichtung im Betrieb besonders robust und zuverlässig. Die Ausbildung der Messkammer mit der Bypassöffnung zum Zuleiten des Prüffluids von der Druckquelle gewährleistet den Betrieb der Prüfeinrichtung in besonders zeiteffizienter Weise. Insbesondere ist die Messkammer über die Bypassöffnung besonders schnell befüllbar, wodurch ein zur Anlageprüfung erforderlicher Zeitraum besonders kurz sein kann. Unter dem Begrenzen des Zustroms und/oder des Abstroms des Prüffluids wird verstanden, dass ein Volumenstrom des Prüffluids reduziert, jedoch nicht vollständig unterbrochen wird. Die mindestens eine Abströmöffnung gewährleistet das fortwährende Ableiten des Prüffluids aus der Messkammer zu der Drucksenke, insbesondere beim Erfassen des Drucks. Vorteilhaft wird hierdurch erreicht, dass das Erfassen des Drucks in der Messkammer nicht ausschließlich in einem bestimmten Zeitfenster eines Messzykluses, sondern kontinuierlich erfolgen kann. Die Anlageprüfung kann damit besonders zeiteffizient erfolgen. Ferner kann der Druck des Prüffluids zum Vermeiden von Messfehlern über einen bestimmten Zeitraum erfasst werden, wodurch ein Anlagezustand des Werkezugs besonders zuverlässig bestimmt werden kann. Insbesondere ist die Funktion der Prüfeinrichtung weitestgehend unabhängig von Leckage, insbesondere im Bereich der Messkammer. Die Prüfeinrichtung ist besonders störresistent. Mittels des Zuströmwiderstands kann der für die Anlageprüfung benötigte Zustrom stark reduziert werden. Der Druckluftverbrauch der Prüfeinrichtung ist damit besonders gering und die Prüfeinrichtung kann energieeffizient betrieben werden. Ferner ist kein Zuströmventil erforderlich. Ein zeitintensives Schalten der Prüfeinrichtung durch Betätigen des Zuströmventils entfällt.

Vorzugsweise ist eine Bypassleitung zum Verbinden der Bypassöffnung mit der Druckquelle strömungswiderstandsfrei ausgebildet. Hierunter ist zu verstehen, dass die Bypassleitung einen erheblich, insbesondere mindestens zehnmal, insbesondere mindestens einhundertmal, insbesondere mindestens fünfhundertmal, insbesondere mindestens eintausendmal, geringeren Strömungswiderstand aufweist, als der Zuströmwiderstand.

Gemäß einem Aspekt der Erfindung ist eine Querschnittsfläche der Bypassöffnung und/oder der Bypassleitung, insbesondere eine über die Gesamtlänge der Bypassleitung mittlere Querschnittsfläche, in Bezug auf eine Querschnittsfläche der Zuströmöffnung und/oder des Zuströmwiderstands und/oder des Abströmwiderstands mindestens zweimal, insbesondere mindestens viermal, insbesondere mindestens fünfmal, insbesondere mindestens zehnmal, so groß. Vorzugsweise verbindet die Bypassleitung die Messkammer fluidleitend mit der Druckquelle, an der auch die Zuströmöffnung zum Zuleiten des Prüffluids angeschlossen ist.

Das Objekt kann ein Werkzeug oder ein Werkstück sein. Vorzugsweise ist die Spannvorrichtung zum reversiblen Verspannen mit dem Objekt ausgebildet. Das Objekt kann eine Plananlagefläche zum zumindest teilweisen Verschließen der mindestens einen Prüföffnung aufweisen.

Die Messkammer kann durch ein Prüfgehäuse begrenzt sein. Vorzugsweise ist die Messkammer in Form von mindestens einer Fluidleitung ausgebildet. Die Messkammer kann auch ein Druckreservoir aufweisen. Insbesondere kann die Messkammer in Form der sich zwischen der Zuströmöffnung, der mindestens einen Abströmöffnung und der Prüföffnung erstreckenden Fluidleitungen ausgebildet sein. Die Prüfeinrichtung ist somit besonders wirtschaftlich herstellbar.

Unter dem Zuströmwiderstand und/oder dem mindestens einen Abströmwiderstand ist ein Strömungswiderstand zu verstehen, welcher erheblich, insbesondere mindestens zehnmal, insbesondere mindestens einhundertmal, insbesondere mindestens fünfhundertmal, insbesondere mindestens eintausendmal, höher ist als ein Strömungswiderstand der Messkammer und/oder der Fluidleitungen, insbesondere der Fluidleitungen zum Verbinden der Zuströmöffnung mit der Druckquelle und/oder zum Verbinden der mindestens einen Abströmöffnung mit der Drucksenke. Der Zuströmwiderstand und/oder der Abströmwiderstand können als eine Verjüngung eines Querschnitts gegenüber der mindestens einen Fluidleitung und/oder als Gitter, insbesondere als Drosselventil, ausgebildet sein.

Die Drucksenke wird vorzugsweise durch eine Umgebung der Prüfeinrichtung ausgebildet. Ein Druck in der Drucksenke entspricht dabei vorzugsweise dem Umgebungsdruck.

Vorzugsweise umfasst das Prüffluid ein Gas, insbesondere Druckluft, und/oder eine Flüssigkeit, insbesondere Wasser und/oder ein Kühlmittel und/oder ein Schmiermittel und/oder eine Emulsion und/oder Glycol. Die Druckquelle kann eine zentrale Druckluftversorgung sein. Das aus Druckluft bestehende Prüffluid ist besonders einfach handhabbar.

Gemäß einem weiteren Aspekt der Erfindung weist die Prüfeinrichtung die Druckquelle auf. Insbesondere kann die Prüfeinrichtung eine Pumpe, insbesondere einen Kompressor, zum Bereitstellen des Drucks an der Druckquelle aufweisen. Die Prüfeinrichtung ist somit unabhängig von zusätzlichen Peripheriekomponenten.

Vorzugsweise ist eine Fluidleitung zum Verbinden der Zuströmöffnung mit der Druckquelle unterbrechungsfrei, insbesondere absperrventilfrei, ausgebildet. Vorzugsweise ist eine Fluidleitung zum Verbinden der mindestens einen Abströmöffnung mit der Drucksenke unterbrechungsfrei, insbesondere absperrventilfrei, ausgebildet. Die Prüfeinrichtung ist somit besonders wirtschaftlich herstellbar.

Der Zustrom des Prüffluids in die Messkammer kann mittels eines Zuströmventils vollständig unterbrechbar sein. Das Zuströmventil kann einen Zuströmventilantrieb zum automatisierten Verlagern des Zuströmventils zwischen einer Offenstellung und einer Verschlussstellung aufweisen. Vorteilhaft wird dadurch erreicht, dass ein Druckluftbedarf der Prüfeinrichtung nur während der Anlageprüfung besteht. Die Prüfeinrichtung kann somit besonders wirtschaftlich betrieben werden.

Eine Prüfeinrichtung gemäß Anspruch 2 gewährleistet eine besonders zuverlässige Anlageprüfung. Dadurch, dass stromaufwärts des Zuströmwiderstands ein Zuströmdrucksensor angeordnet ist, können Druckschwankungen des zuströmenden Prüffluids bzw. der Druckquelle erfasst werden. Die Kenntnis über diese Druckschwankungen ermöglicht es, diese bei der Anlageprüfung zu berücksichtigen.

Eine Prüfeinrichtung nach Anspruch 3 ist besonders flexibel einsetzbar. Das Spanngehäuse kann relativ zu dem Grundgehäuse um mindestens eine, insbesondere mindestens zwei, insbesondere drei, Achsen drehbar gelagert sein und/oder entlang von mindestens einer, insbesondere mindestens zwei, insbesondere mindestens drei, Achsen verschiebbar gelagert sein. Das Spanngehäuse kann als drehbarer Kopf einer Werkzeugspindel ausgebildet sein. Das Grundgehäuse kann entsprechend als feststehender Teil der Werkzeugspindel ausgebildet sein.

Die Prüfeinrichtung kann mindestens eine Anlagedichtung zum reversiblen Abdichten des Lagerspalts zwischen dem Grundgehäuse und dem Spanngehäuse aufweisen. Vorzugsweise ist die Anlagedichtung mittels des Prüffluids betätigbar. Die Anlagedichtung weist vorzugsweise eine Verschlussstellung auf, in welcher diese sowohl das Grundgehäuse als auch das Spanngehäuse dichtend kontaktiert, und eine Offenstellung, in welcher diese dem Grundgehäuse und/oder dem Spanngehäuse gegenüber kontaktfrei angeordnet ist. Die Prüfeinrichtung ist somit besonders verschleißarm.

Eine Prüfeinrichtung nach Anspruch 4 ist wirtschaftlich herstellbar und besonders zuverlässig betreibbar. Vorzugsweise ist der Abströmwiderstand der mindestens einen Abströmöffnung, welche zwischen dem Gehäuse und dem Spanngehäuse ausgebildet ist, durch einen Lagerspalt zwischen dem Grundgehäuse und dem Spanngehäuse gebildet. Eine vollständige Abdichtung eines Lagerspalts zwischen dem Grundgehäuse und dem Spanngehäuse ist somit zur Anlageprüfung nicht erforderlich. Auf eine kostenintensive Anlagedichtung kann verzichtet werden.

Eine Prüfeinrichtung nach Anspruch 5 ist besonders energieeffizient und zeiteffizient betreibbar. Die Labyrinthdichtung ist vorzugsweise zum Abdichten des Spanngehäuses gegenüber dem Grundgehäuse ausgebildet. Die Prüfeinrichtung umfasst vorzugsweise mindestens zwei Labyrinthdichtungen zum beidseitigen Abdichten der sich über den Lagerspalt erstreckenden Messkammer. Dadurch, dass die Labyrinthdichtung berührungsfrei ausgebildet ist, ist die Prüfeinrichtung besonders verschleißarm. Der Abstrom des Prüffluids aus der Messkammer in die Drucksenke kann durch die Labyrinthdichtung erheblich reduziert werden. Insbesondere ermöglicht die Labyrinthdichtung die Anlageprüfung während des Verlagerns des Spanngehäuses relativ zu dem Grundgehäuse. Stillstandzeiten können somit vermieden werden.

Eine Prüfeinrichtung nach Anspruch 6 ist besonders zuverlässig betreibbar. Der mindestens eine Abströmwiderstand kann als, insbesondere pneumatisch und/oder elektrisch und/oder manuell, betätigbares, einstellbares Drosselventil ausgebildet sein. Insbesondere kann der mindestens eine Abströmwiderstand zum temperaturabhängigen Begrenzen des Abstroms des Prüffluids ausgebildet sein. Dadurch, dass der mindestens eine Abströmwiderstand einstellbar ist, kann ein Druck des Prüffluids in der Messkammer derart eingestellt werden, dass der Drucksensor in seinem linearen Messbereich arbeitet. Insbesondere können Temperaturschwankungen in der Messkammer und/oder Druckschwankungen des zuströmenden Prüffluids ausgeglichen werden.

Eine Prüfeinrichtung nach Anspruch 7 ist besonders zeiteffizient betreibbar. Vorzugsweise weist das Bypassventil einen Ventilantrieb zum Verlagern des Bypassventils zwischen einer Offenstellung und einer Verschlussstellung auf. Das Bypassventil kann somit automatisiert zwischen der Offenstellung und der Verschlussstellung verlagert werden. Zum Befüllen der Messkammer können die Bypassleitung und/oder das Bypassventil einen Strömungswiderstand aufweisen, welcher, insbesondere mindestens fünfmal, insbesondere mindestens zehnmal, insbesondere mindestens zwanzigmal, niedriger ist, als der Strömungswiderstand der Messkammer. Bei der Anlageprüfung kann das Bypassventil zum Steigern der Messgenauigkeit geschlossen werden.

Eine Prüfeinrichtung nach Anspruch 8 ist besonders effizient betreibbar und automatisierbar. Zum Bestimmen eines Prüfdrucks des Prüffluids in der Messkammer steht die Steuereinheit mit dem Drucksensor in Signalverbindung. Die Steuereinheit kann dazu ausgebildet sein, eine Druckänderung anhand des Prüfdrucks zu bestimmen. Vorzugsweise ist die Steuereinheit dazu ausgebildet die Druckänderung mit einem Druckänderungsgrenzwert und/oder den Prüfdruck mit einem Prüfdruckgrenzwert zu vergleichen. Die Steuereinheit ist vorzugsweise derart ausgebildet, dass ein fehlerhafter Positionierzustand detektiert wird, sofern der Prüfdruck geringer ist als der Prüfdruckgrenzwert. Vorzugsweise ist die Steuereinheit dazu ausgebildet, den Positionierzustand erst dann zu bestimmen, wenn die Druckänderung geringer ist als der Druckänderungsgrenzwert. Vorteilhaft wird hierdurch erreicht, dass der Positionierzustand erst dann bestimmt wird, wenn sich in der Messkammer ein weitestgehend stationärer Prüfdruck eingestellt hat.

Gemäß einem weiteren Aspekt der Erfindung kann die Steuereinheit derart ausgebildet sein, dass der Positionierzustand anhand der Druckänderung bestimmt wird. Insbesondere kann die Steuereinheit dazu ausgebildet sein, den Positionierzustand vor Erreichen eines stationären Zustands des Druckwerts zu bestimmen. Hierzu kann die Steuereinheit den Druckänderungswert mit einem Solldruckänderungswert und/oder einem, insbesondere zeitlichen, Druckänderungsverlauf mit einem Solldruckänderungsverlauf vergleichen. Vorzugsweise wird eine fehlerhafte Positionierung des Objekts bestimmt, wenn der Druckänderungswert geringer ist als der Solldruckänderungswert und/oder wenn der Druckänderungsverlauf eine vorgegebene Grenzabweichung zu einem Solldruckänderungsverlauf überschreitet. Die Steuereinheit kann für das Bestimmen des Positionierzustands auch zum Bestimmen eines Zeitkoeffizienten der Druckänderung ausgebildet sein. Das Bestimmen des Positionierzustands kann somit besonders zeitsparend erfolgen.

Gemäß einem Aspekt der Erfindung steht die Steuereinheit mit dem Zuströmdrucksensor und/oder einem Temperatursensor und/oder einem Bewegungssensor in Signalverbindung. Der Temperatursensor ist vorzugsweise zum Erfassen einer Temperatur des Prüffluids in der Messkammer ausgebildet. Der Bewegungssensor kann als Drehsensor zum Erfassen einer Drehbewegung des Spanngehäuses relativ zu dem Grundgehäuse ausgebildet sein. Die Steuereinheit kann dazu ausgebildet sein, den Positionierzustand anhand eines Signals des Zuströmdrucksensors und/oder des Temperatursensors und/oder des Bewegungssensors zu bestimmen. Insbesondere kann mittels der Steuereinheit über die Drehbewegung auf den bewegungsabhängigen Abströmwiderstand der Labyrinthdichtung geschlossen werden. Der Positionierzustand kann somit besonders zuverlässig bestimmt werden.

Eine Prüfeinrichtung nach Anspruch 9 ist besonders energieeffizient betreibbar und automatisierbar. Das Zuströmventil kann zum vollständigen Verschließen des Zustroms des Prüffluids ausgebildet sein. Dadurch, dass die Steuereinheit mit dem Zuströmventil in Signalverbindung steht, kann der Bedarf an Druckluft auf den Zeitraum der Anlageprüfung beschränkt werden. Insbesondere kann die Steuereinheit dazu ausgebildet sein, den Abströmwiderstand und/oder den Zuströmwiderstand in Abhängigkeit eines Signals des Temperatursensors und/oder des Bewegungssensors einzustellen. Der Drucksensor kann somit in seinem linearen Messbereich betrieben werden, wodurch die Anlageprüfung besonders zuverlässig und präzise erfolgen kann.

Der Erfindung liegt ferner die Aufgabe zugrunde, eine Spannvorrichtung zum Positionieren und Aufspannen des Objekts zu schaffen, welche besonders energieeffizient und zeiteffizient betreibbar ist.

Diese Aufgabe wird durch eine Spannvorrichtung mit den Merkmalen des Anspruchs 10 gelöst. Die Vorteile der erfindungsgemäßen Spannvorrichtung entsprechen den Vorteilen der vorstehend beschriebenen Prüfeinrichtung. Der Anlagekörper zum Verspannen mit dem Objekt kann durch das Spanngehäuse ausgebildet sein. Gemäß einem Aspekt der Erfindung weist die Spannvorrichtung mindestens ein Spannelement zum Bewirken einer Spannkraft zwischen dem Objekt und dem Anlagekörper auf. Die Prüföffnung kann in dem Anlagekörper als Bohrung und/oder als, insbesondere ringförmige, Nut ausgebildet sein. Der Anlagekörper kann ein Dichtelement aufweisen. Vorzugsweise ist das Dichtelement derart ausgebildet, dass es bei einem fehlerfreien Anliegen des Objekts an der Spannvorrichtung zum vollständigen Verschluss der Prüföffnung abdichtend mit dem Objekt zusammenwirkt.

Der Erfindung liegt ferner die Aufgabe zugrunde, eine verbesserte Werkzeugmaschine zu schaffen.

Diese Aufgabe wird durch eine Werkzeugmaschine mit den Merkmalen des Anspruchs 11 gelöst. Die Vorteile der erfindungsgemäßen Werkzeugmaschine entsprechen den Vorteilen der vorstehend beschriebenen Spannvorrichtung sowie der vorstehend beschriebenen Prüfeinrichtung. Die Werkzeugmaschine kann als Mehrachsmaschine ausgebildet sein. Die Antriebseinrichtung kann zum rotatorischen und/oder translatorischen Verlagern des Antriebskörpers relativ zu dem Maschinengestell ausgebildet sein. Vorzugsweise ist die Antriebseinrichtung derart ausgebildet, dass der Anlagekörper um mindestens eine, insbesondere mindestens zwei, insbesondere mindestens drei Drehachsen und/oder entlang von mindestens einer, insbesondere mindestens zwei, insbesondere mindestens drei Verlagerungsrichtungen relativ zu dem Maschinegestell verlagerbar ist. Die Antriebseinrichtung kann einen Spindelantrieb zum rotatorischen Verlagern des Anlagekörpers relativ zu dem Maschinengestell umfassen. Gemäß einem Aspekt der Erfindung weist die Werkzeugmaschine eine Maschinensteuerung zur Steuerung auf. Vorteilhaft wird hierdurch erreicht, dass ein Betrieb der Werkzeugmaschine in Abhängigkeit von dem Positionierzustand aufgenommen oder unterbrochen werden kann.

Der Erfindung liegt ferner die Aufgabe zugrunde, ein Verfahren zur Anlageprüfung eines Objekts an einer Spannvorrichtung zu schaffen, welches besonders energieeffizient und zeiteffizient ausführbar ist und ein Detektieren eines fehlerhaften Positionierzustands zuverlässig ermöglicht.

Diese Aufgabe wird durch ein Verfahren mit den Merkmalen des Anspruchs 12 gelöst. Die Vorteile des erfindungsgemäßen Verfahrens entsprechen den Vorteilen der vorstehend beschriebenen Werkzeugmaschine, der Spannvorrichtung sowie der Prüfeinrichtung. Vorzugsweise wird der Positionierzustand anhand eines Signals des Zuströmdrucksensors und/oder des Temperatursensors und/oder des Bewegungssensors bestimmt. Der Abströmwiderstand wird vorzugsweise anhand eines Signals des Zuströmdrucksensors und/oder des Temperatursensors und/oder des Bewegungssensors eingestellt.

Gemäß einem Aspekt der Erfindung wir der Betrieb der Werkzeugmaschine, insbesondere der Antriebseinrichtung, in Abhängigkeit von dem Positionierzustand aufgenommen und/oder unterbrochen und/oder beschränkt.

Ein Verfahren nach Anspruch 13 ist besonders zeiteffizient und flexibel durchführbar. Insbesondere umfasst das Verlagern der mindestens einen Prüföffnung relativ zu der Zuströmöffnung eine Drehbewegung. Vorzugsweise erfolgt die Anlageprüfung während des Verlagerns der mindestens einen Prüföffnung relativ zu der Zuströmöffnung. Stillstandzeiten zum Prüfen der Anlage des Objekts an der Spannvorrichtung können somit vermieden werden.

Ein Verfahren nach Anspruch 14 gewährleistet eine besonders zuverlässige Prüfung der Anlage des Objekts an der Spannvorrichtung. Die Messtemperatur wird vorzugsweise als Temperatur des Prüffluids in der Messkammer erfasst. Dadurch, dass der erfasste Druck in Abhängigkeit von der Messtemperatur und/oder von der Relativbewegung variieren kann, führt eine Berücksichtigung der Messtemperatur und/oder der Relativbewegung bei der Anlageprüfung zu einem besonders zuverlässigen Prüfergebnis.

Ein Verfahren nach Anspruch 15 gewährleistet die Anlageprüfung in besonders zuverlässiger Weise. Durch das Einstellen des Abströmwiderstands in Abhängigkeit von der Messtemperatur und/oder der Relativbewegung können Störeinflüsse auf den Druck des Prüffluids in der Messkammer reduziert werden.

Ein Verfahren nach Anspruch 16 ist besonders zeiteffizient durchführbar. Vorzugsweise wird das Prüffluid über die Zuströmöffnung und zusätzlich über eine von der Zuströmöffnung und/oder der Abströmöffnung separate Bypassöffnung in die Messkammer zugeführt. Durch das zusätzliche Befüllen der Messkammer über die Bypassöffnung kann der für die Anlageprüfung notwendige Druck in der Messkammer besonders schnell erreicht werden. Die mit der Bypassöffnung verbundene Bypassleitung wird vorzugsweise nach dem Befüllen der Messkammer verschlossen. Hierdurch wird erreicht, dass der Druck in der Messkammer besonders sensibel auf eine Abströmung des Prüffluids über die Prüföffnung reagiert. Das Erfassen des Drucks erfolgt entsprechend bei verschlossener Bypassleitung.

Ein Verfahren nach Anspruch 17 ist besonders zeiteffizient durchführbar. Dadurch, dass der Positionierzustand während der Druckänderung in der Messkammer bestimmt wird, kann eine Wartezeit während des Befüllens der Messkammer mit dem Prüffluid bis zum Ausbilden eines weitestgehend stationären Drucks vermieden werden. Zum Bestimmen des Positionierzustands kann eine Druckänderung und/oder ein Druckverlauf und/oder ein Zeitkoeffizient der Druckänderung bestimmt werden. Insbesondere kann anhand des Druckverlaufs ein sich einstellender Konvergenzdruckwert vorherberechnet werden. Dadurch, dass Wartezeiten vermieden werden können, kann die Anlageprüfung besonders zeitsparend durchgeführt werden und die Werkzeugmaschine kann besonders effizient betrieben werden.

Weitere Merkmale, Vorteile und Einzelheiten der Erfindung ergeben sich aus der nachfolgenden Beschreibung eines Ausführungsbeispiels. Es zeigen:
- Fig. 1: eine schematische Darstellung einer Werkzeugmaschine mit einem Maschinengestell, einer Spannvorrichtung und einer Antriebseinrichtung zum Verlagern eines Anlagekörpers der Spannvorrichtung relativ zu dem Maschinengestell und
- Fig. 2: eine schematische Darstellung der Spannvorrichtung in Fig. 1, wobei die Spannvorrichtung den Anlagekörper zum Verspannen mit einem Objekt und eine Prüfeinrichtung aufweist und wobei eine an dem Anlagekörper angeordnete Prüföffnung der Prüfeinrichtung von dem Objekt vollständig verschlossen ist.

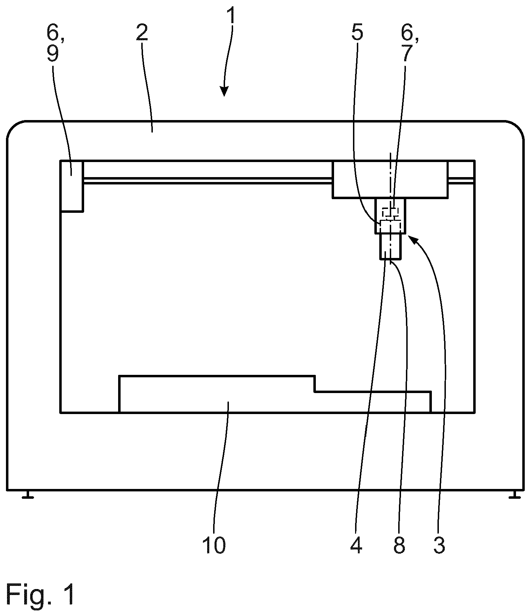

In der Fig. 1 ist eine Werkzeugmaschine 1 mit einem Maschinengestell 2 und einer Spannvorrichtung 3 dargestellt. Die Spannvorrichtung 3 ist zum Positionieren und Aufspannen eines Objekts 4 ausgebildet. Zum verspannen mit dem Objekt 4 weist die Spannvorrichtung 3 einen Anlagekörper 5 auf.

Die Werkzeugmaschine 1 umfasst eine Antriebseinrichtung 6 zum Verlagern des Anlagekörpers 5 relativ zu dem Maschinengestell 2. Zum Drehantreiben des Objekts 4 umfasst die Antriebseinrichtung 6 einen Spindelantrieb 7. Mittels des Spindelantriebs 7 ist das Objekt 4 um eine Drehachse 8 verlagerbar. Die Antriebseinrichtung 6 weist einen Linearantrieb 9 zum Verlagern des Anlagekörpers 5 relativ zu dem Maschinengestell 2 auf. Die Werkzeugmaschine 1 ist dazu ausgebildet, ein Werkstück 10 mittels des Objekts 4 zu bearbeiten.

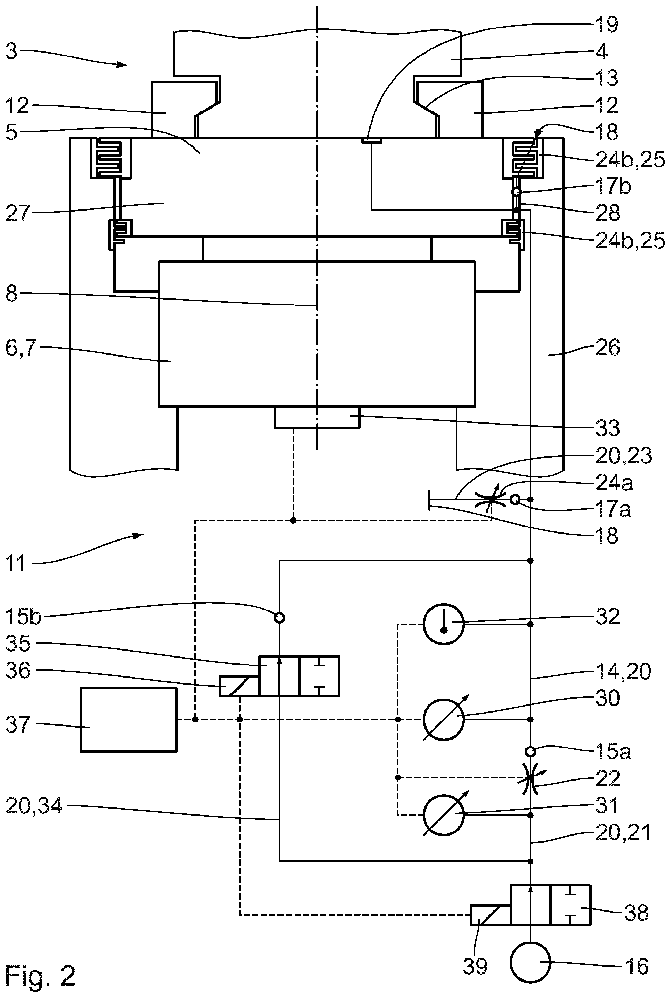

In der Fig. 2 ist die Spannvorrichtung 3 weiter im Detail dargestellt. Die Spannvorrichtung 3 ist zum Positionieren und Aufspannen des Objekts 4 ausgebildet. Die Spannvorrichtung 3 umfasst eine Prüfeinrichtung 11 zur Anlageprüfung des Objekts 4 und der Spannvorrichtung 3. Zum Bereitstellen einer zwischen dem Objekt 4 und dem Anlagekörper 5 wirkenden Spannkraft weist die Spannvorrichtung 3 mehrere Spannelemente 12 auf. Die Spannelemente 12 sind in radialer Richtung zu der Drehachse 8 verlagerbar an dem Anlagekörper 5 angeordnet. Die Spannelemente 12 wirken mit dem Objekt 4 über je eine Klemmfläche 13 zusammen. Die Klemmfläche 13 ist dazu ausgebildet, aufgrund einer radialen Verlagerung zu der Drehachse 8 eine entlang der Drehachse 8 wirkende Klemmkraft auf das Objekt 4 auszuüben.

Die Prüfeinrichtung 11 weist eine Messkammer 14 auf. Die Messkammer 14 umfasst zwei Zuströmöffnungen 15a, 15b zum Zuleiten eines Prüffluids von einer Druckquelle 16. Die Druckquelle 16 ist als Druckluftquelle ausgebildet. Ferner umfasst die Messkammer 14 zwei Abströmöffnungen 17a, 17b zum Ableiten des Prüffluids zu einer Drucksenke 18. Die Drucksenke 18 ist durch eine Umgebung der Prüfeinrichtung 11, insbesondere durch einen Innenraum des Maschinengestells 2 ausgebildet. Die Messkammer 14 umfasst ferner eine Prüföffnung 19, welche an dem Anlagekörper 5 angeordnet ist. Die Prüföffnung 19 ist von dem an dem Anlagekörper 5 anliegenden Objekt 4 zumindest teilweise verschließbar.

Die Prüfeinrichtung 11 weist Fluidleitungen 20 zum Leiten von Druckluft auf. Die Messkammer 14 wird durch die zwischen den Zuströmöffnungen 15a, 15b, den Abströmöffnungen 17a, 17b und der Prüföffnung 19 angelegten Fluidleitungen 20 ausgebildet.

Die erste Zuströmöffnung 15a ist an einer Prüfleitung 21 angeordnet. Zwischen der ersten Zuströmöffnung 15a und der Druckquelle 16, insbesondere an der Prüfleitung 21, ist ein Zuströmwiderstand 22 angeordnet. Der Zuströmwiderstand 22 ist zum Begrenzen eines Zustroms des Prüffluids über die Zuströmöffnung 15a ausgebildet. Der Zuströmwiderstand 22 ist als einstellbares Drosselventil ausgebildet.

Die erste Abströmöffnung 17a steht mit der Drucksenke 18 über eine Reduzierleitung 23 in fluidleitender Verbindung. Zum Begrenzen eines Abstroms des Prüffluids über die erste Abströmöffnung 17a ist zwischen dieser und der Drucksenke 18 ein erster Abströmwiderstand 24a angeordnet. Der erste Abströmwiderstand 24a ist einstellbar. Insbesondere ist der erste Abströmwiderstand 24a als einstellbares Drosselventil ausgebildet.

Die zweite Abströmöffnung 17b steht mit der Drucksenke 18 über einen zweiten Abströmwiderstand 24b in fluidleitender Verbindung. Der zweite Abströmwiderstand 24b ist als Labyrinthdichtung 25 ausgebildet.

Die Labyrinthdichtung 25 ist zwischen einem Grundgehäuse 26 und einem Spanngehäuse 27 angeordnet. Das Spanngehäuse 27 ist drehfest mit dem Anlagekörper 5 verbunden. Insbesondere ist der Anlagekörper 5 durch das Spanngehäuse 27 ausgebildet. Das Grundgehäuse 26 ist drehfest mit dem Maschinegestell 2 verbunden.

Die Messkammer 14 überspannt einen Lagerspalt 28 zwischen dem Grundgehäuse 26 und dem Spanngehäuse 27. Die Labyrinthdichtung 25 ist zum Abdichten der Messkammer 14 im Bereich des Lagerspalts 28 gegenüber der Drucksenke 18, insbesondere der Umgebung, ausgebildet.

Die Prüfeinrichtung 11 weist einen Drucksensor 30 auf, welcher mit der Messkammer 14 fluidleitend in Verbindung steht. Ferner umfasst die Prüfeinrichtung 11 einen Zuströmdrucksensor 31 zum Erfassen eines Drucks des Prüffluids stromaufwärts des Zuströmwiderstands 22. Der Zuströmdrucksensor 31 ist vor dem Zuströmwiderstand 22 an der Prüfleitung 21 angeordnet.

Die Prüfeinrichtung 11 weist einen Temperatursensor 32 zum Erfassen einer Temperatur des Prüffluids in der Messkammer 14 auf. An dem Spindelantrieb 7 ist ein Drehsensor 33 zum Erfassen einer Drehbewegung, insbesondere einer Drehzahl, des Anlagekörpers 5 relativ zu dem Maschinengestell 2 angeordnet.

Die zweite Zuströmöffnung 15b ist mit der Druckquelle 16 über eine Bypassleitung 34 fluidleitend verbunden. Die zweite Zuströmöffnung 15b ist auch als Bypassöffnung bezeichnet. Zum reversiblen Verschließen der Bypassleitung 34 ist an dieser ein Bypassventil 35 angeordnet. Zum automatisierten Schalten des Bypassventils 35 zwischen einer Offenstellung und einer Verschlussstellung weist das Bypassventil 35 einen Ventilantrieb 36 auf.

Die Prüfeinrichtung 11 weist eine Steuereinheit 37 auf. Die Steuereinheit 37 steht mit dem Drucksensor 30, dem Zuströmdrucksensor 31, dem Temperatursensor 32 und dem Drehsensor 33 in Signalverbindung. Ferner steht die Steuereinheit 37 in Signalverbindung mit dem ersten Abströmwiderstand 24a, dem Zuströmwiderstand 22 und dem Ventilantrieb 36. Die Steuereinheit 37 ist zum Bestimmen eines Positionierzustands des Objekts 4 an dem Anlagekörper 5 anhand eines Signals des Drucksensors 30 ausgebildet. Ferner ist die Steuereinheit 37 dazu ausgebildet den Positionierzustand anhand einer von dem Drehsensor 33 erfassten Drehbewegung, anhand einer von dem Temperatursensor 32 bestimmten Temperatur und anhand eines von dem Zuströmdrucksensor 31 erfassten Drucks zu bestimmen. Zum Verlagern des Bypassventils 35 zwischen der Offenstellung und der Verschlussstellung steht die Steuereinheit 37 in Signalverbindung mit dem Ventilantrieb 36. Ferner ist die Steuereinheit 37 dazu ausgebildet, den Zuströmwiderstand 22 und den ersten Abströmwiderstand 24a anhand des von dem Drucksensor 30 erfassten Drucks einzustellen.

Die Prüfeinrichtung 11 weist ein Zuströmventil 38 zum reversiblen Absperren des Zustroms des Prüffluids aus der Druckquelle 16 auf. Das Zuströmventil 38 umfasst einen Zuströmventilantrieb 39. Der Zuströmventilantrieb 39 steht mit der Steuereinheit 37 in Signalverbindung.

Die Funktionsweise der Werkzeugmaschine 1 bzw. der Spannvorrichtung 3 bzw. der Prüfeinrichtung 11 zur Anlageprüfung des Objekts 4 an der Spannvorrichtung 3 ist wie folgt:
Die Werkzeugmaschine 1 befindet sich in einer Grundstellung. Die Spannvorrichtung 3 ist an dem Maschinengestell 2 angebracht, wobei die Prüföffnung 19 zu einem Innenraum des Maschinengestells 2 hin geöffnet ist. Der Spindelantrieb 7 ist deaktiviert. Das Bypassventil 35 befindet sich in der Verschlussstellung. Die Prüföffnung 19 ist über die Messkammer 14, die erste Zuströmöffnung 15a und den Zuströmwiderstand 22 und das Zuströmventil 38 mit der Druckquelle 16 verbunden. Das Zuströmventil 38 befindet sich in einer Verschlussstellung.

Mittels eines Signals der Steuereinrichtung 37 wird der Zuströmventilantrieb 39 aktiviert und das Zuströmventil 38 wird aus der Verschlussstellung in eine Offenstellung verlagert. Durch den Zuströmwiderstand 22 begrenzt strömt fortwährend Prüffluid in Form von Druckluft in die Messkammer 14 und aus dieser über die Prüföffnung 19 in die durch den Innenraum des Maschinengestells 2 gebildete Drucksenke 18 ab. Aus der Messkammer 14 strömt Druckluft zu dem über die Labyrinthdichtung 25 und den zweiten Abströmwiderstand 24a in die Drucksenke 18 ab.

Der Drucksensor 30 und der Zuströmdrucksensor 31 erfassen je einen Druck des Prüffluids. Der Zuströmwiderstand 22 ist mittels der Steuereinheit 37 derart eingestellt, dass der an dem Drucksensor 30 anlegende Druck im linearen Messbereich des Drucksensors 30 liegt. Während des nachfolgend beschriebenen Prüfvorgangs wird der Zuströmwiderstand 22 von der Steuereinheit 37 anhand eines Signals des Zuströmdrucksensors 31 derart eingestellt, dass niederfrequente Druckschwankungen des zuströmenden Prüffluids ausgeglichen werden.

Der Druck in der Messkammer 14 ist geringer als der Druck in der Druckquelle 16 und höher als ein in der Drucksenke 18 herrschender Druck.

Das Objekt 4 wird mit der Spannvorrichtung 3 verbunden. Hierzu wird das Objekt 4 an den Anlagekörper 5 herangeführt. Die Spannelemente 12 werden in radialer Richtung zu der Drehachse 8 an das Werkstück 4 herangeführt, wodurch das Objekt 4 entlang der Drehachse 8 mit dem Anlagekörper 5 verspannt wird. In einem ersten Positionierzustand liegt das Objekt 4 vollständig und fehlerfrei an dem Anlagekörper 5 an. Das Objekt 4 verschließt die Prüföffnung 19 dabei vollständig. Mittels der Steuereinheit 37 wird ein Druckanstieg an dem Drucksensor 30 bestimmt. Die Steuereinheit 37 stellt ein Signal zum Öffnen des Bypassventils 35 an den Ventilantrieb 36 bereit. Das Bypassventil 35 wird geöffnet. Über das Bypassventil 35 und die zweite Bypassöffnung 15b strömt das Prüffluid in die Messkammer 14 ein. Ein über die Bypassöffnung 15b in die Messkammer 14 zugeleiteter Fluidstrom ist größer als ein über die Zuströmöffnung 15a in die Messkammer 14 zugeleiteter Fluidstrom. Über die Bypassleitung 34 kann ein Befüllen der Messkammer 14 mit dem Prüffluid besonders schnell erfolgen.

Die Steuereinheit 37 vergleicht einen an dem Drucksensor 30 anliegenden Prüfdruck mit einem Befülldruckgrenzwert. Sobald der Prüfdruck den Befülldruckgrenzwert überschreitet stellt die Steuereinheit 37 ein Signal zum Verschließen des Bypassventils 35 an den Ventilantrieb 36 bereit. Der Ventilantrieb 36 verlagert das Bypassventil aus der Offenstellung in die Verschlussstellung.

Die Steuereinheit 37 bestimmt eine Druckänderung an dem Drucksensor 30. Die Steuereinheit 37 vergleicht die Druckänderung mit einem Druckänderungsgrenzwert. Sobald die Druckänderung den Druckänderungsgrenzwert unterschreitet, wird mittels des Drucksensors 30 der zur Anlageprüfung erforderliche Prüfdruck in der Messkammer 14 erfasst.

Die Steuereinheit 37 vergleicht den Prüfdruck mit einem Prüfdruckgrenzwert. Ein Positionierzustand des Objekts 4 an der Spannvorrichtung 3 wird abhängig von einer Differenz zwischen dem Prüfdruck und dem Prüfdruckgrenzwert bestimmt. Da das Objekt 4 fehlerfrei an dem Anlagekörper 5 anliegt, ist der Prüfdruck höher als der Prüfdruckgrenzwert. Die Steuereinheit 37 detektiert das fehlerfreie Anliegen des Objekts 4 an der Spannvorrichtung 3. Die Steuereinheit 37 stellt ein Signal an eine nicht dargestellte Maschinensteuerung der Werkzeugmaschine 1 bereit, welches mit dem fehlerfreien Positionierzustand korreliert. Der Spindelantrieb 7 wird aktiviert und das Werkstück 10 wird mittels des Objekt 4 bearbeitet.

Bei der Bearbeitung von Werkstücken 10 ist die Spannvorrichtung 3 Verunreinigungen ausgesetzt. Verunreinigungen, insbesondere von dem Werkstück 10 abgetragenes Material, kann an den Anlagekörper 5 gelangen. Beispielsweise kann ein Span zwischen den Anlagekörper 5 und das Objekt 4 gelangen. Das Objekt 4 ist dann fehlerhaft an der Spannvorrichtung 3 positioniert. Alternativ ist es möglich, dass die Spannelemente 12 aufgrund einer Fehlfunktion nicht die erforderliche Anpresskraft zwischen dem Objekt 4 und dem Anlagekörper 5 bereitstellen können. Das Objekt 4 kann sich dann beim Spannen in einen fehlerhaften zweiten Positionierzustand verlagern.

Der fehlerhafte Positionierzustand führt dazu, dass die Prüföffnung 19 von dem Objekt 4 nicht vollständig verschlossen wird. Dadurch, dass das Prüffluid zusätzlich über die Prüföffnung 19 aus der Messkammer 14 abströmen kann, ist der Druck des Prüffluids in der Messkammer 14 reduziert. Insbesondere ist der Prüfdruck bei dem fehlerhaften Positionierzustand geringer als bei dem fehlerfreien Positionierzustand.

Der Prüfdruck wird mittels der Steuereinheit 37 wiederum dann bestimmt, wenn die Druckänderung den Druckänderungsgrenzwert unterschreitet. Der Prüfdruck wird mit dem Prüfgrenzdruck verglichen. Da der sich einstellende Prüfdruck aufgrund der Leckage zwischen dem Objekt 4 und dem Anlagekörper 5 geringer ist als der Prüfdruckgrenzwert, wird der fehlerhafte Positionierzustand detektiert. Die Steuereinheit 37 stellt ein mit dem fehlerhaften Positionierzustand korrelierendes Signal an der Maschinensteuerung bereit. Die Inbetriebnahme der Werkzeugmaschine, insbesondere die Bearbeitung des Werkstücks 10 wird gesperrt. Ein Alarmsignal wird mittels der Maschinensteuerung an einen Benutzer ausgegeben.

Dadurch, dass der Lagerspalt 28 zwischen dem Grundgehäuse 26 und dem Spanngehäuse 27 mittels der Labyrinthdichtung 25 abgedichtet ist, kann das Bestimmen des Positionierzustands während des Verlagerns des Anlagekörpers 5 relativ zu dem Maschinengestell 2 also während des Betriebs der Werkzeugmaschine 1 erfolgen. Insbesondere kann das Bestimmen des Positionierzustands beim Verlagern der Prüföffnung 19 relativ zu der Zuströmöffnung 15a erfolgen. Der zweite Abströmwiderstand 24b der Labyrinthdichtung 25 ist abhängig von einer Bewegung des Spanngehäuses 27 relativ zu dem Grundgehäuse 26. Diese Relativbewegung wird mittels des Drehsensors 33 erfasst. Der erste Abströmwiderstand 24a wird mittels der Steuereinheit 37 anhand des Signals des Drehsensors 33 eingestellt. Der erste Abströmwiderstand 24a wird derart eingestellt, dass ein Gesamtabströmwiderstand zwischen der Messkammer 14 und der Drucksenke 18, über den ersten Abströmwiderstand 24a und den zweiten Abströmwiderstand 24b, konstant bleibt.

Die Steuereinheit 37 bestimmt den Positionierzustand unter Berücksichtigung der von dem Temperatursensor 32 erfassten Temperatur des Prüffluids in der Messkammer 14. Insbesondere wird der erste Abströmwiderstand 24a anhand der Temperatur in der Messkammer 14 eingestellt. Die sich mit der Temperatur ändernden Eigenschaften des Prüffluids werden bei der Bestimmung des Positionierzustands durch die Steuereinheit 37 berücksichtigt.

Durch Ausbilden der Messkammer 14 mit der Zuströmöffnung und der mindestens einen Abströmöffnung, wobei zum Begrenzen des Zustroms des Prüffluids der Zuströmwiderstand 22 vorgesehen und wobei zum Begrenzen des Abstroms des Prüffluids die Abströmwiderstände 24a, 24b vorgesehen sind, kann die Anlageprüfung des Objekts 4 an der Spannvorrichtung 3 besonders zuverlässig und energieeffizient erfolgen. Dadurch, dass der zweite Abströmwiderstand 24b als Labyrinthdichtung 25 ausgebildet ist, kann auf eine kostenintensive, verschleißanfällige und nur unter erhöhtem Zeitaufwand verlagerbare Anlagedichtung verzichtet werden. Der einstellbare Zuströmwiderstand 22 ermöglicht den Ausgleich von Druckschwankungen. Die Bypassleitung 34 gewährleistet zusammen mit dem Bypassventil 35 eine besonders zeiteffiziente Anlageprüfung des Werkstücks 4 an der Spannvorrichtung 3.

## Patentansprüche

1. Prüfeinrichtung zur Anlageprüfung eines Objekts an einer Spannvorrichtung, aufweisend
- eine Messkammer (14) mit
-- einer Zuströmöffnung (15a) zum Zuleiten eines Prüffluids von einer Druckquelle (16), und
-- mindestens einer Prüföffnung (19), welche von dem an der Spannvorrichtung (3) anliegenden Objekt (4) zumindest teilweise verschließbar ist,
- einen Zuströmwiderstand (22) zum Begrenzen eines Zustroms des Prüffluids über die Zuströmöffnung (15a), und
- einen Drucksensor (30) zum Erfassen eines Drucks des Prüffluids in der Messkammer (14),
wobei die Messkammer (14) eine Bypassöffnung (15b) zum Zuleiten des Prüffluids von der Druckquelle (16) aufweist,
**dadurch gekennzeichnet, dass** die Messkammer mindestens eine Abströmöffnung (17a, 17b) zum Ableiten des Prüffluids zu einer Drucksenke (18) aufweist,
wobei die Prüfeinrichtung mindestens einen Abströmwiderstand (24a, 24b) zum Begrenzen eines Abstroms des Prüffluids über die mindestens eine Abströmöffnung (17a, 17b) aufweist.

2. Prüfeinrichtung nach Anspruch 1, **gekennzeichnet durch** einen stromaufwärts des Zuströmwiderstands (22) angeordneten Zuströmdrucksensor (31).

3. Prüfeinrichtung nach Anspruch 1 oder 2, **dadurch gekennzeichnet, dass** die Messkammer (14) durch ein Grundgehäuse (26) und ein relativ zu dem Grundgehäuse (26) verlagerbares Spanngehäuse (27) ausgebildet ist, wobei die Zuströmöffnung (15a) an dem Grundgehäuse (26) angeordnet ist und wobei die Prüföffnung (19) an dem Spanngehäuse (27) angeordnet ist.

4. Prüfeinrichtung nach Anspruch 3, **dadurch gekennzeichnet, dass** die mindestens eine Abströmöffnung (17a, 17b) zwischen dem Grundgehäuse (26) und dem Spanngehäuse (27) ausgebildet ist.

5. Prüfeinrichtung nach Anspruch 3 oder 4, **dadurch gekennzeichnet, dass** der mindestens eine Abströmwiderstand (24a, 24b) als Labyrinthdichtung (25) zwischen dem Grundgehäuse (26) und dem Spanngehäuse (27) ausgebildet ist.

6. Prüfeinrichtung nach einem der vorstehenden Ansprüche, **dadurch gekennzeichnet, dass** der mindestens eine Abströmwiderstand (24a, 24b) einstellbar ist.

7. Prüfeinrichtung nach einem der vorstehenden Ansprüche, **gekennzeichnet durch** ein Bypassventil (35) zum reversiblen Unterbrechen eines Zustroms des Prüffluids über die Bypassöffnung (15b).

8. Prüfeinrichtung nach einem der vorstehenden Ansprüche, **gekennzeichnet durch** eine Steuereinheit (37), welche zum Bestimmen eines Positionierzustands des Objekts (4) an der Spannvorrichtung (3) mit dem Drucksensor (30) in Signalverbindung steht.

9. Prüfeinrichtung nach Anspruch 8, **dadurch gekennzeichnet, dass** die Steuereinheit (37) zum Steuern des Zuströmwiderstands (22) und/oder des mindestens einen Abströmwiderstands (24a, 24b) und/oder eines Bypassventils (35) und/oder eines Zuströmventils (38) mit diesen in Signalverbindung steht.

10. Spannvorrichtung zum Positionieren und Aufspannen eines Objekts mit
- einer Prüfeinrichtung (11) nach einem der Ansprüche 1 bis 9 und
- einem Anlagekörper (5) zum Verspannen mit dem Objekt (4),
- wobei die mindestens eine Prüföffnung (19) an dem Anlagekörper (5) angeordnet ist.

11. Werkzeugmaschine, mit
- einem Maschinengestell (2),
- einer Spannvorrichtung (3) nach Anspruch 10 und
- einer Antriebseinrichtung (6) zum Verlagern des Anlagekörpers (5) relativ zu dem Maschinengestell (2).

12. Verfahren zur Anlageprüfung eines Objekts an einer Spannvorrichtung, umfassend die Schritte:
- Bereitstellen einer Prüfeinrichtung (11) nach einem der Ansprüche 1 bis 9,
- Erfassen des Drucks des Prüffluids in der Messkammer (14) mittels des Drucksensors (30), wobei das Prüffluid beim Erfassen des Drucks fortwährend über die mindestens eine Abströmöffnung (17a, 17b) aus der Messkammer (14) abströmt, und
- Bestimmen eines Positionierzustands anhand des Drucks.

13. Verfahren nach Anspruch 12, **gekennzeichnet durch** Verlagern der mindestens einen Prüföffnung (19) relativ zu der Zuströmöffnung (15a) beim Erfassen des Drucks.

14. Verfahren nach Anspruch 12 oder 13, **gekennzeichnet durch** Bestimmen des Positionierzustands in Abhängigkeit von einer Messtemperatur und/oder einer Relativbewegung zwischen der Prüföffnung (19) und der Zuströmöffnung (15a).

15. Verfahren nach einem der Ansprüche 12 bis 14, **gekennzeichnet durch** Einstellen des mindestens einen Abströmwiderstands (24a, 24b) in Abhängigkeit von einer Messtemperatur und/oder einer Relativbewegung zwischen der Prüföffnung (19) und der Zuströmöffnung (15a).

16. Verfahren nach einem der Ansprüche 12 bis 15, **gekennzeichnet durch** Befüllen der Messkammer über eine Bypassleitung (34) mit dem Prüffluid, Verschließen der Bypassleitung (34) und Erfassen des Drucks bei verschlossener Bypassleitung (34).

17. Verfahren nach einem der Ansprüche 12 bis 16, **dadurch gekennzeichnet, dass** das Bestimmen des Positionierzustands während einer Druckänderung in der Messkammer (14) bestimmt wird.

## Claims

1. Test equipment for testing the seating of an object on a clamping device, having
- a measurement chamber (14) with
-- an inflow opening (15a) for supplying a test fluid from a pressure source (16),
and
-- at least one test opening (19), which can be at least partially closed by the object (4) resting against the clamping device (3),
- an inflow resistance (22) for limiting an inflow of the test fluid via the inflow opening (15a),
and
- a pressure sensor (30) for detecting a pressure of the test fluid in the measurement chamber (14),
wherein
the measurement chamber (14) has a bypass opening (15b) for supplying the test fluid from the pressure source (16),
**characterised in that**
the measurement chamber has at least one outflow opening (17a, 17b) for discharging the test fluid to a pressure sink (18), wherein the test equipment has at least one outflow resistance (24a, 24b) for limiting an outflow of the test fluid via the at least one outflow opening (17a, 17b).

2. Test equipment according to Claim 1, **characterised by** an inflow pressure sensor (31) arranged upstream of the inflow resistance (22).

3. Test equipment according to Claim 1 or 2, **characterised in that** the measurement chamber (13) is formed by a base housing (26) and a clamping housing (27) that can be moved relative to the base housing (26), wherein the inflow opening (15a) is arranged on the base housing (26) and wherein the test opening (19) is arranged on the clamping housing (27).

4. Test equipment according to Claim 3, **characterised in that** the at least one outflow opening (17a, 17b) is formed between the base housing (26) and the clamping housing (27).

5. Test equipment according to Claim 3 or 4, **characterised in that** the at least one outflow resistance (24a, 24b) is configured as a labyrinth seal (25) between the base housing (26) and the clamping housing (27).

6. Test equipment according to one of the preceding claims, **characterised in that** the at least one outflow resistance (24a, 24b) can be adjusted.

7. Test equipment according to one of the preceding claims, **characterised by** a bypass valve (35) for reversibly interrupting an inflow of the test fluid via the bypass opening (15b).

8. Test equipment according to one of the preceding claims, **characterised by** a control unit (37), which is in signal communication with the pressure sensor (30) for determining a positioning state of the object (4) on the clamping device.

9. Test equipment according to Claim 8, **characterised in that** the control unit (37) is in signal communication the inflow resistance (22) and/or at least one outflow resistance (24a, 24b) and/or a bypass valve (35) and/or an inflow valve (38) for controlling same.

10. Clamping device for positioning and clamping an object with
- a piece of test equipment (11) according to one of Claims 1 to 9 and
- a seating body (5) for clamping with the object (4),
- wherein the at least one test opening (19) is arranged on the seating body (5).

11. Machine tool, with
- a machine frame (2),
- a clamping device (3) according to Claim 10 and
- a drive device (6) for moving the seating body (5) relative to the machine frame (2).

12. Method for testing the seating of an object on a clamping device, comprising the steps:
- providing a piece of test equipment (11) according to one of Claims 1 to 9,
- detecting the pressure of the test fluid in the measurement chamber (14) by means of the pressure sensor (30), wherein the pressure fluid continuously flows out of the measurement chamber (14) via the at least one outflow opening (17a, 17b) when the pressure is being detected, and
- determining a positioning state based on the pressure.

13. Method according to Claim 12, **characterised by** moving the at least one test opening (19) relative to the inflow opening (15a) when the pressure is being detected.

14. Method according to Claim 12 or 13, **characterised by** determining the positioning state as a function of a measurement temperature and/or a relative movement between the test opening (19) and the inflow opening (15a).

15. Method according to one of Claims 12 to 14, **characterised by** adjusting the at least one outflow resistance (24a, 24b) as a function of a measurement temperature and/or a relative movement between the test opening (19) and the inflow opening (15a).

16. Method according to one of Claims 12 to 15, **characterised by** filling the measurement chamber with the test fluid via a bypass line (34), closing the bypass line (34) and detecting the pressure with the bypass line (34) closed.

17. Method according to one of Claims 12 to 16, **characterised in that** determining of the positioning state is determined during a pressure change in the measurement chamber (14).

## Revendications

1. Dispositif de contrôle pour le contrôle de la butée d'un objet sur un dispositif de serrage, présentant
- une chambre de mesure (14) comportant
-- un orifice d'entrée (15a) pour l'amenée d'un fluide de contrôle depuis une source de pression (16),
et
-- au moins un orifice de contrôle (19) qui peut être fermé au moins en partie par l'objet (4) en butée sur le dispositif de serrage (3),
- un élément de résistance au flux entrant (22) pour la limitation d'un flux entrant du fluide de contrôle par l'orifice d'entrée (15a),
et
- un capteur de pression (30) pour la détection d'une pression du fluide de contrôle dans la chambre de mesure (14),
dans lequel
la chambre de mesure (14) présente un orifice de dérivation (15b) pour l'amenée du fluide de contrôle depuis la source de pression (16),
**caractérisé en ce que**
la chambre de mesure présente au moins un orifice de sortie (17a, 17b) pour l'évacuation du fluide de contrôle vers un puits de pression (18), le dispositif de contrôle présentant au moins un élément de résistance au flux sortant (24a, 24b) pour la limitation d'un flux sortant du fluide de contrôle par ledit au moins un orifice de sortie (17a, 17b).

2. Dispositif de contrôle selon la revendication 1, **caractérisé par** un capteur de pression de flux entrant (31) disposé en amont de l'élément de résistance au flux entrant (22).

3. Dispositif de contrôle selon la revendication 1 ou 2, **caractérisé en ce que** la chambre de mesure (14) est formée par un logement de base (26) et un logement de serrage (27) déplaçable par rapport au logement de base (26), l'orifice d'entrée (15a) étant disposé sur le logement de base (26) et l'orifice de contrôle (19) étant disposé sur le logement de serrage (27).

4. Dispositif de contrôle selon la revendication 3, **caractérisé en ce que** l'au moins un orifice de sortie (17a, 17b) est formé entre le logement de base (26) et le logement de serrage (27).

5. Dispositif de contrôle selon la revendication 3 ou 4, **caractérisé en ce que** l'au moins un élément de résistance au flux sortant (24a, 24b) est réalisé sous la forme d'un joint labyrinthe (25) entre le logement de base (26) et le logement de serrage (27).

6. Dispositif de contrôle selon l'une des revendications précédentes, **caractérisé en ce que** ledit au moins un élément de résistance au flux sortant (24a, 24b) est réglable.

7. Dispositif de contrôle selon l'une des revendications précédentes, **caractérisé par** une soupape de dérivation (35) pour l'interruption réversible d'un flux entrant du fluide de contrôle par le biais de l'orifice de dérivation (15b).

8. Dispositif de contrôle selon l'une des revendications précédentes, **caractérisé par** une unité de commande (37) qui est en liaison de signaux avec le capteur de pression (30) pour la détermination d'un état de positionnement de l'objet (4) sur le dispositif de serrage (3).

9. Dispositif de contrôle selon la revendication 8, **caractérisé en ce que,** pour la commande de l'élément de résistance au flux entrant (22) et/ou dudit au moins un élément de résistance au flux sortant (24a, 24b) et/ou d'une soupape de dérivation (35) et/ou d'une soupape d'entrée (38), l'unité de commande (37) est en liaison de signaux avec ceux-ci.

10. Dispositif de serrage pour le positionnement et le serrage d'un objet, comportant
- un dispositif de contrôle (11) selon l'une des revendications 1 à 9 et
- un corps de butée (5) pour le serrage avec l'objet (4),
- dans lequel l'au moins un orifice de contrôle (19) est disposé sur le corps de butée (5).

11. Machine-outil, comportant
- un bâti de machine (2),
- un dispositif de serrage (3) selon la revendication 10 et
- un dispositif d'entraînement (6) pour le déplacement du corps de butée (5) par rapport au bâti de machine (2).

12. Procédé de contrôle de la butée d'un objet sur un dispositif de serrage, comprenant les étapes :
- mise à disposition d'un dispositif de contrôle (11) selon l'une des revendications 1 à 9,
- détection de la pression du fluide de contrôle dans la chambre de mesure (14) au moyen du capteur de pression (30), le fluide de contrôle sortant continuellement de la chambre de mesure (14) par le biais dudit au moins un orifice de sortie (17a, 17b) lors de la détection de la pression, et
- détermination d'un état de positionnement à l'aide de la pression.

13. Procédé selon la revendication 12, **caractérisé par** le déplacement de l'au moins un orifice de contrôle (19) par rapport à l'orifice d'entrée (15a) lors de la détection de la pression.

14. Procédé selon la revendication 12 ou 13, **caractérisé par** la détermination de l'état de positionnement en fonction d'une température de mesure et/ou d'un mouvement relatif entre l'orifice de contrôle (19) et l'orifice d'entrée (15a).

15. Procédé selon l'une des revendications 12 à 14, **caractérisé par** le réglage de l'au moins un élément de résistance au flux sortant (24a, 24b) en fonction d'une température de mesure et/ou d'un mouvement relatif entre l'orifice de contrôle (19) et l'orifice d'entrée (15a).

16. Procédé selon l'une des revendications 12 à 15, **caractérisé par** le remplissage de la chambre de mesure par le fluide de contrôle par le biais d'une conduite de dérivation (34), la fermeture de la conduite de dérivation (34) et la détection de la pression lorsque la conduite de dérivation (34) est fermée.

17. Procédé selon l'une des revendications 12 à 16, **caractérisé en ce que** la détermination de l'état de positionnement est déterminée pendant une modification de pression dans la chambre de mesure (14).
